# EUROPEAN PATENT APPLICATION

(11) **EP 3 442 218 A1**
(43) Date of publication of application: **13.02.2019**
(21) Application number: 18188039.4
(22) Date of filing: 08.08.2018
(51) Int. Cl.: H04N 5/232, H04N 5/235, H04N 5/243

(54) **IMAGING APPARATUS AND CONTROL METHOD FOR OUTPUTTING IMAGES WITH DIFFERENT INPUT/OUTPUT CHARACTERISTICS IN DIFFERENT REGIONS AND REGION INFORMATION, CLIENT APPARATUS AND CONTROL METHOD FOR RECEIVING IMAGES WITH DIFFERENT INPUT/OUTPUT CHARACTERISTICS IN DIFFERENT REGIONS AND REGION INFORMATION AND DISPLAYING THE REGIONS IN A DISTINGUISHABLE MANNER**

(30) Priority: 09.08.2017 JP 2017153813; 16.05.2018 JP 2018094397
(71) Applicant: CANON KABUSHIKI KAISHA, Ohta-ku Tokyo 146-8501 (JP)
(72) Inventor: URANO, Moemi, Ohta-ku, Tokyo (JP); ONO, Mitsuhiro, Ohta-ku, Tokyo (JP)
(74) Representative: Perkins, Dawn Elizabeth

(57) **Abstract**

Region information of a captured image is acquired, indicating a first region to which a first input/output characteristic is applied and a second region to which a second input/output characteristic is applied, so that the first region and the second region can be displayed in a distinguishable manner and a correction intended by a user can thus be performed for higher color reproducibility.

## Description

### BACKGROUND OF THE INVENTION

### Field of the Invention

The present disclosure relates to a technology applying correction processing for each of regions of a captured image acquired by composing a plurality of images.

### Description of the Related Art

In recent years, monitoring systems employing a network camera have been widely spread. Because such a network camera is used in various fields as monitoring cameras in large-scale public institutions and mass retailers, there has been a need for an extended dynamic range for environments having a large difference in illuminance or environments having different illuminations.

Additionally, more accurate display of colors has been demanded. For example, Japanese Patent Laid-Open No. 2016-192606 discloses a method for determining imaging conditions including exposure conditions and image processing conditions for a plurality of regions categorized based on differences in characteristic of a recognized object. Japanese Patent Laid-Open No. 2015-192152 proposes calculating and correcting a white balance for each plurality of regions.

However, due to the extended dynamic range, a malfunction may occur in a case where correction processing is performed on an image having a plurality of divided regions applying different input/output characteristics (gamma curves) within the image. For example, when a user performs processing for adjusting a white balance on an entire image without consideration of input/output characteristics applied to the divided regions, it may be difficult to achieve intended color reproduction.

### SUMMARY OF THE INVENTION

The present invention in its first aspect provides an imaging apparatus as specified in Claims 1 and 2.

The present invention in its second aspect provides a client apparatus as specified in Claims 3 to 8.

The present invention in its third aspect provides a control method for an image processing system as specified in Claim 9.

The present invention in its fourth aspect provides a control method for an imaging apparatus as specified in Claim 10.

The present invention in its fifth aspect provides a control method for a client apparatus as specified in Claim 11.

The present invention in its sixth aspect provides a storage medium as specified in Claim 12.

Further features of the present invention will become apparent from the following description of embodiments with reference to the attached drawings.

### BRIEF DESCRIPTION OF THE DRAWINGS

Fig. 1 is a schematic diagram illustrating a system configuration.
Fig. 2 is a block diagram illustrating a configuration of a camera.
Fig. 3 is a block diagram illustrating a configuration of a client.
Fig. 4 is a block diagram illustrating details of a configuration of an image processing unit in the camera.
Fig. 5 is a flowchart illustrating gamma adjustment processing.
Fig. 6A is a schematic diagram illustrating an example of a scene. Fig. 6B is a schematic diagram for explaining a histogram. Fig. 6C is a schematic diagram for explaining gamma curves. Fig. 6D is a schematic diagram illustrating a map.
Fig. 7 is a schematic diagram illustrating an overview of a graphical user interface (GUI).
Fig. 8 is a flowchart illustrating an overview of processing to be performed by the image processing unit.
Figs. 9A to 9D are schematic diagrams illustrating examples of scenes with different exposures.
Fig. 10A is a schematic diagram for explaining an image composition ratio. Fig. 10B is a schematic diagram illustrating a map.
Fig. 11A is a schematic diagram illustrating an overview of a GUI. Fig. 11B is a table illustrating camera settings in a case where a priority mode is applied.
Fig. 12 is a flowchart illustrating process for setting a white balance.
Fig. 13 is a schematic diagram illustrating examples of a plurality of parameters which are set for components of the image processing unit.
Fig. 14 is a block diagram illustrating details of a configuration of the image processing unit.
Fig. 15 is a flowchart illustrating an overview of processing to be performed by the image processing unit.
Fig. 16 is a schematic diagram illustrating an overview of a GUI.

### DESCRIPTION OF THE EMBODIMENTS

With reference to drawings, embodiments will be described in detail below.

### Embodiment 1

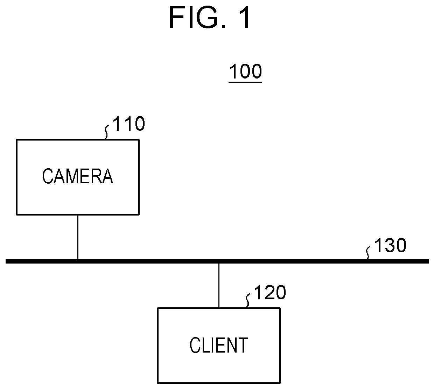

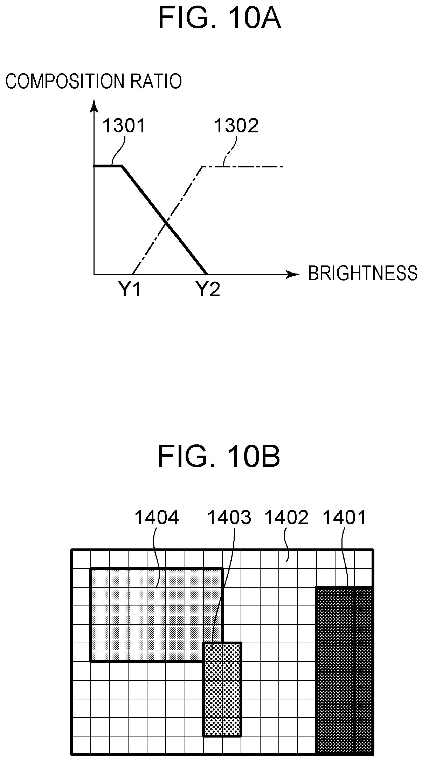

With reference to Fig. 1 to Figs. 10A and 10B, Embodiment 1 of the present disclosure will be described below. As the embodiment of the present disclosure, a network camera will be described below.

Fig. 1 illustrates an example of a schematic configuration of a network camera system corresponding to an image processing system according to Embodiment 1. Referring to Fig. 1, a network camera system 100 includes a network camera (hereinafter, called a camera) 110 corresponding to an imaging apparatus, a viewer client (hereinafter, called a client) 120, and a network 130. The camera 110 and the client 120 are mutually communicably connected over the network 130. It should be noted that the imaging apparatus is not limited to such a network camera but may be replaced by a digital single-lens reflex camera, a mirrorless single-lens reflex camera, a compact digital camera, a camcorder, a tablet terminal, a PHS, a smart phone, a feature phone, a mobile game machine or other mobile apparatuses having an imaging function.

The camera 110 is configured to distribute image data including a photographed (or captured) image over the network 130. The client 120 may access the camera 110, define initial settings for the camera 110, set imaging parameters for the camera 110, and define distribution settings such that desired image data can be acquired. The client 120 may process image data distributed from the camera 110, store the distributed image data, process the stored image data, and display an image based on the processed image data. The network 130 connects the camera 110 and the client 120 mutually communicably and may include a plurality of routers, switches, and cables which satisfy a communication standard such as Ethernet. According to this embodiment, the network 130 may be based on any communication standard and may have any size and any configuration if the network 130 can implement communication without hindrance (for image distribution and for defining camera settings) between the camera 110 and the client 120. Therefore, any networks including the Internet through a wired LAN and a wireless LAN are applicable as the network 130.

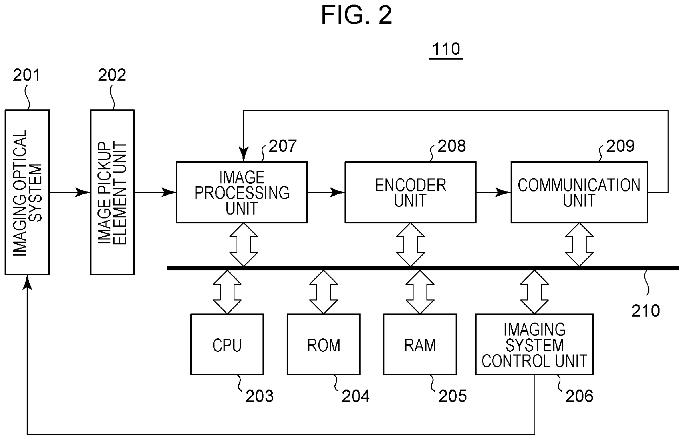

Fig. 2 is a block diagram illustrating a configuration of the camera 110 according to this embodiment. An imaging optical system 201 includes an object lens, a zoom lens, a focus lens, and an optical aperture and is configured to gather optical information regarding an object to an image pickup element unit 202 which will be described below. The image pickup element unit 202 is configured to convert the optical information gathered by the imaging optical system 201 to an electric current value and includes a CCD or CMOS sensor configured to acquire color information in combination with a color filter, for example. The image pickup element unit 202 herein is fundamentally an imaging sensor for which an arbitrary exposure period can be set for each pixel.

A CPU 203 relates to processes to be performed by components connected to a bus 210. For example, the CPU 203 may sequentially read out and interpret instructions stored in a ROM (Read Only Memory) 204 or a RAM (Random Access Memory) 205 and executes a process based on the result of the interpretation. An imaging system control unit 206 is configured to drive a focus lens to focus on the imaging optical system 201 and to control the imaging optical system 201 to execute processing such as adjusting the aperture as instructed from the CPU 203 if any.

More specifically, the aperture drive control is performed based on an exposure value calculated based on an AE function designated by an imaging mode set by a user, such as a program AE (automatic exposure), a shutter speed priority AE, or an aperture priority AE.

The CPU 203 is configured to perform AF (Autofocus) control under AE control. The AF control may apply an active method, a phase difference detection system, a contrast detection method or the like. Because these kinds of AE and AF configurations and controls may apply publicly known general technologies, detail descriptions thereon will be omitted.

An image signal digitized in the image pickup element unit 202 is input to an image processing unit 207. The image processing unit 207 is configured to perform an image process, which will be described below, to generate a brightness signal Y and a color difference signal Cb*Cr.

An encoder unit 208 is configured to perform an encoding process for converting image data processed in the image processing unit 207 to have a predetermined format such as Jpeg, H.264, or H.265.

A communication unit 209 is configured to execute communication based on a protocol for camera control such as onvif with the client 120 and distribute captured image data to the client 120 over the network 130. The communication based on a protocol for camera control includes receiving a camera operation command, a camera setting command, and an inquiry about a function, for example, from the client 120 and transmitting responses thereto and necessary data excluding image data.

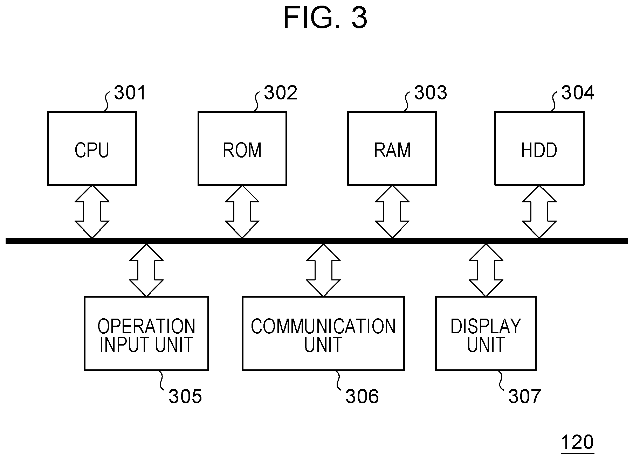

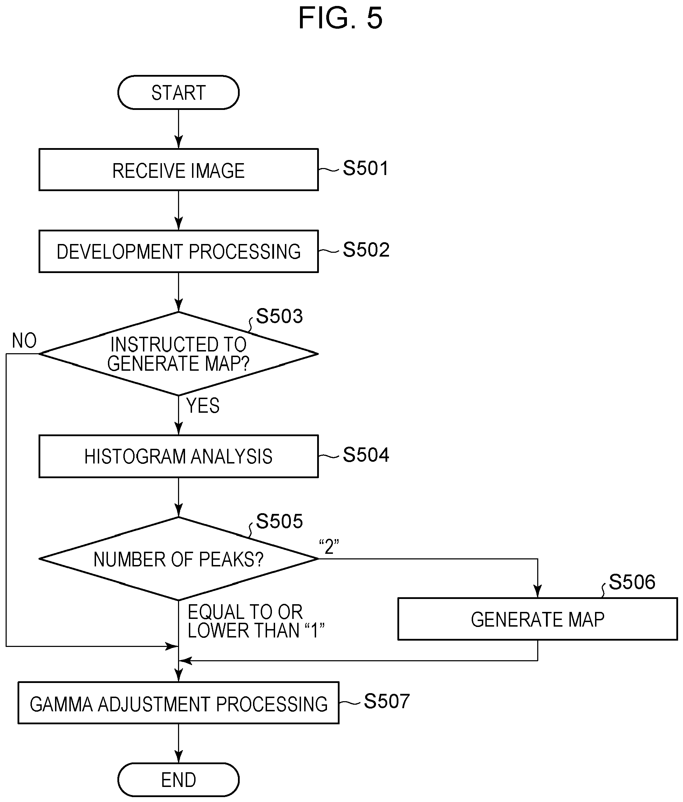

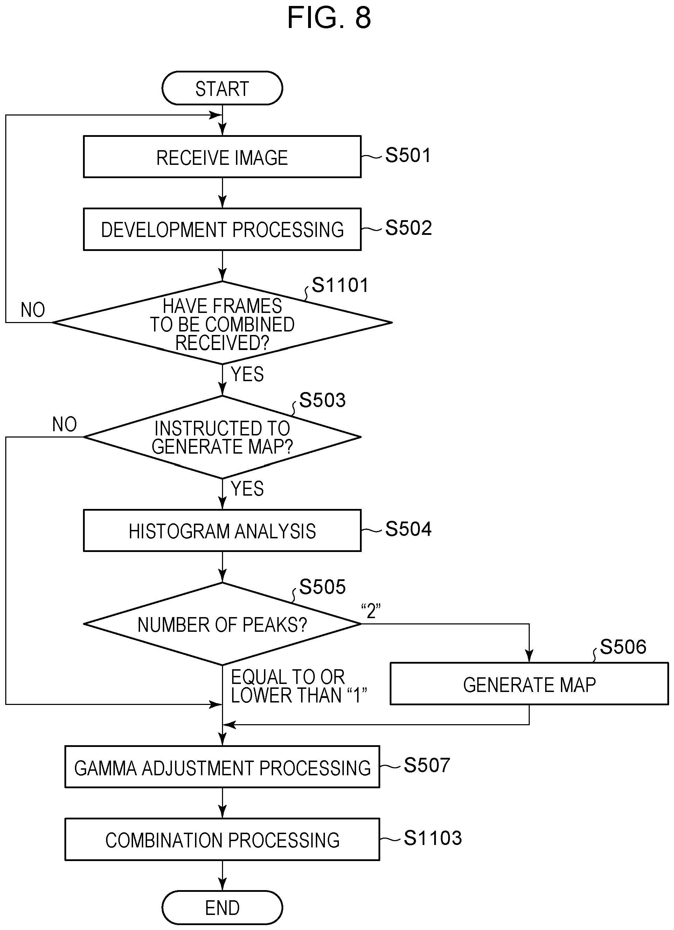

Fig. 3 is a block diagram illustrating a schematic configuration of the client 120 according to this embodiment. A CPU 301 is configured to control operations to be performed in the client 120 overall. A ROM 302 is a non-volatile memory configured to store a control program for executing a process by the CPU 301. The RAM 303 functions as a main memory, a work area and the like for the CPU 301. In other words, the CPU 301 may load a program from the ROM 302 to the RAM 303 in order to execute a corresponding process and may execute the loaded program to implement functional operations and execute processing illustrated in Figs. 5 and 8 which will be described below.

An HDD 304 is a large-capacity secondary storage unit configured to store data, image data and information to be used in processing performed by the CPU 301, for example. The HDD 304 may store data, image data and information obtained by processing executed by the CPU 301 by using a program.

An operation input unit 305 is an input unit including operating devices such as a power supply button, a keyboard and a mouse and functions as a receiving unit configured to receive settings (including settings for image processing and priority levels for each of region, which will be described below) from a user. A communication unit 306 is configured to perform processing for communication between the client 120 and the network 130. More specifically, the communication unit 306 is configured to receive, over the network 130, image data captured by the camera 110. The communication unit 306 is further configured to transmit a camera operation command to the camera 110 and receive a response thereto and data excluding image data.

A display unit 307 includes a graphical user interface or GUI (details of which will be described below) and a display for inputting control parameters for the camera 110. The display unit 307 may be configured to perform display control for displaying a GUI, which will be described below, on an external display. Partial or all of functions of components of the client 120 can be achieved by a program executed by the CPU 301. At least parts of the components (such as a GPU and a DMA) of the client 120 may operate separately from the CPU 301 as a dedicated hardware module. In this case, the dedicated hardware module operates under control of the CPU 301.

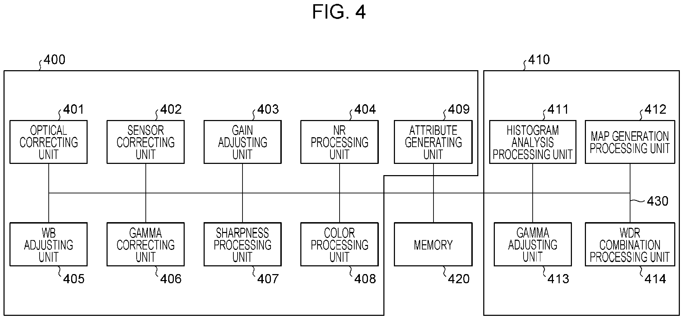

Fig. 4 is a block diagram illustrating details of the configuration of the image processing unit 207 according to this embodiment. The image processing unit 207 may roughly be divided into two blocks of a development processing unit 400 and a dynamic range extension processing unit 410 and connects to a memory 420 via a local bus 430.

The development processing unit 400 includes an optical correcting unit 401, a sensor correcting unit 402, and a gain adjusting unit 403. The optical correcting unit 401 is configured to correct the imaging optical system 201 by correcting a lens aberration or correcting peripheral brightness of image data input from the image pickup element unit 202. The sensor correcting unit 402 is configured to correct the image pickup element unit 202 by correcting a scratch or defect of a sensor or by performing an offset adjustment. The gain adjusting unit 403 is configured to perform a gain adjustment with a digital value including a gain of a sensor. The development processing unit 400 further includes components configured to perform correction processes on image data, including an NR processing unit 404 configured to perform a noise reduction process, an WB adjusting unit 405 configured to adjust a white balance, a gamma correcting unit 406 configured to perform a gamma correction, a sharpness processing unit 407 configured to perform a sharpness process, and a color processing unit 408 configured to perform color processes such as a contrast adjustment process, a saturation adjustment process, and a color conversion process. Outputs from the development processing unit 400 are temporarily stored in the memory 420.

The dynamic range extension processing unit 410 includes a histogram analysis processing unit 411, a map generation processing unit 412, which will be described below, a gamma adjusting unit 413, and a WDR composition processing unit 414. Map information generated by the map generation processing unit 412 is also stored in the memory 420. Function modules of the dynamic range extension processing unit 410 will be described below.

In order to change details of an image process based on a brightness of a pixel, an attribute generating unit 409 is configured to output attribute information to the components of the image processing unit 207 (development processing unit 400). With reference to the attribute information output from the attribute generating unit 409, the components can change process parameters for processing image data.

For example, a brightness threshold value Y^{th} may be set in the attribute generating unit 409. The attribute generating unit 409 then compares a brightness value and the brightness threshold value Y^{th} for each processing object pixel and adds, as attribute information, information indicating whether the brightness value is higher than the threshold value or not to brightness information on the pixel. For example, the attribute information may be a Boolean value. If the brightness value of the pixel is higher than Y^{th}, a Boolean value "1" is held. If lower, a Boolean value "0" is held. With reference to the attribute information, the optical correcting unit 401 to the color processing unit 408 set process parameters corresponding to the attribute information.

Next, with reference to Fig. 5, a flow of operations to be performed by the image processing unit 207 will be described. In step S501, the image processing unit 207 receives image data from the image pickup element unit 202. Next, in step S502, the image processing unit 207 performs various processes on image data received by the components of the development processing unit 400.

Next, in step S503, the image processing unit 207 determines whether an instruction to generate a map has been received from the client 120. This instruction here corresponds to a command to be transmitted from the client when a user starts a job for image adjustment relating to, for example, a white balance, according to this embodiment. For example, the instruction may correspond to a command meaning that a request relating to map information has been received from the client 120 in a case where the map information indicates regions to undergo different details of development process based on their brightnesses. If the command is not received, gamma adjustment processes is performed in step S507, which will be described below. Then, the processing ends. On the other hand, if the map generation instruction is received, the processing moves to step S504.

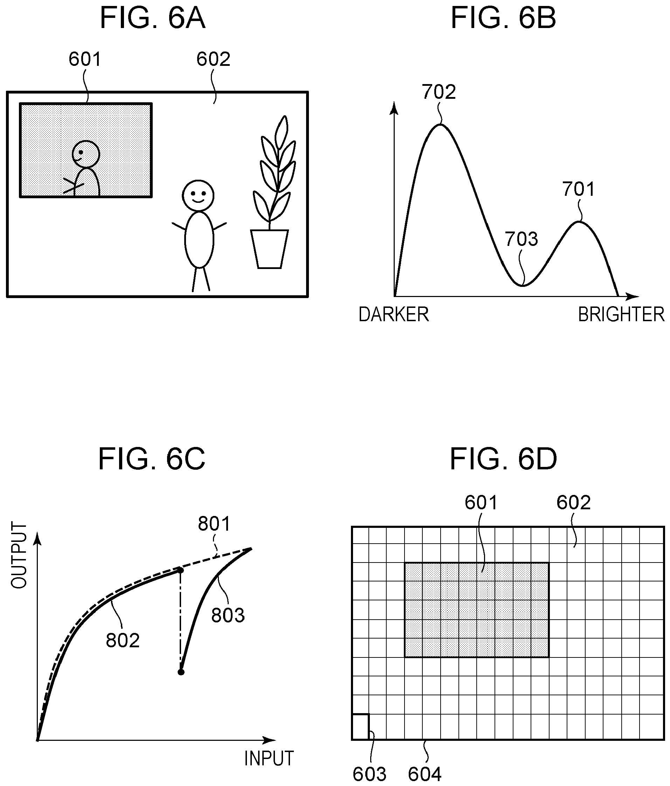

In step S504, the histogram analysis processing unit 411 performs a histogram analysis. A histogram will be described with reference to Figs. 6A to 6D. Fig. 6A illustrates an example of an image captured scene, and a range including an outside region of a shaded window 601 and an indoor area 602. The outside area of the window 601 and the indoor area 602 are influenced by different light sources, and the resulting image region of the window 601 and the resulting image region of the indoor area 602 have a large brightness difference therebetween. A scene with such a large brightness difference results in a histogram including a histogram having a peak 702 corresponding to the indoor area 602 and a histogram having a peak 701 corresponding to the window 601 with a valley 703 therebetween, as illustrated in Fig. 6B.

The histogram analyzing unit 411 in step S504 generates a histogram for a brightness value of each of pixels from image data and detects whether the generated histogram has two peaks or only one peak. Based on the number of peak(s) as a result of the analysis, the processing branches off in step S505.

If one or fewer peaks are detected, gamma adjustment processing 507, which will be described below, is performed. Then, the image processing unit 207 exits the processing. If two peaks are detected, map generation processing is performed in step S506. If two peaks are detected, the histogram analyzing unit 411 sets the brightness value of the valley 703 between the peaks to the attribute generating unit 409. It may be configured such that three or more peaks are to be detected, and a region may be divided into a number corresponding to the detected number of peaks. It may further be configured such that a peak can be ignored if a smaller number of pixels are included therein (or if the size of the region having the peak is small).

In step S506, the map generation processing unit 412 generates a map. For an image having two peaks detected, the map shows, on the image, to which of the two peaks of the histogram the region belongs. First, the map generation processing unit 412 divides an image into a plurality of brightness regions. According to this embodiment, a subject image 604 has a resolution of 1920 × 1080 and thus is divided into 64 × 36 blocks 603. To generate a map, those blocks may be divided into blocks 603 having pixels more than 2/3 of the number of pixels of the block, with a brightness value higher than the brightness value of the valley 703 in the histogram, and the other blocks 603. Fig. 6C illustrates a map corresponding to the image illustrated in Fig. 6A. Because the window part has a higher brightness, a clear division can be seen between the region corresponding to the window 601 and the other region. The dynamic range extension processing unit 410 outputs the map information and the number of peaks detected in step S505 to the memory 420, and the communication unit 209 notifies it to the client 120.

In step S507, the gamma adjusting unit 413 performs the gamma adjustment processing. If the map generation processing in step S506 is not performed, the gamma for adjustment is represented by a gamma curve indicated by a dotted line 801 in Fig. 6C. If the map is generated, the gamma for adjustment is adjusted to have characteristics as represented by solid lines 802 (first input/output characteristic) and 803 (second input/output characteristic) in Fig. 6C. As illustrated in Fig. 6C, the gamma characteristics are discontinuous. The brightness region is divided at the discontinuous brightnesses as a boundary. In other words, referring to Fig. 6B, an adjustment is performed to reduce the brightness of the region having a brightness subsequent to the valley 703 for acquiring an overall dynamic range. The output value decreases with the brightness value corresponding to the valley 703, and the brightness adjustment can be performed by using the gamma curve so that the dynamic range can be extended and that the visibility of the bright region can be improved. The processing by the image processing unit 207 completes here.

Next, processing will be described which is to be performed after the set parameters transmitted from the client 120 are received by the camera 110. The set parameters received from the client 120 are reflected as parameters for image processes to be performed by the image processing modules (the components 401 to 409 in Fig. 4) and are changed with reference to a threshold value set in the attribute generating unit 409. More specifically, a brightness threshold value corresponding to the value of the valley 703 of the histogram is set as the brightness threshold value to the attribute generating unit 409, and the image process parameters are changed with reference to the value. Thus, even when an object moves, the same gamma correction can be applied if the object is the same. Also, the white balance processing to be performed on pixels with a higher brightness is maintained.

Next, white balance processing will be described in detail. For a white balance, two operation modes are provided including an automatic setting and a manual setting. One of the operation modes may be designated by the client 120. The operation to be performed by the client will be described below.

If the white balance automatic setting mode is designated, region information indicating a white balance measurement region is also transmitted from the client 120 to the camera 110. In the white balance manual setting mode, color temperature information and light source information relating to a white balance are received from the client 120. Either manual setting mode or automatic setting mode can be set for each of two regions if detected by the histogram analysis in step S504. Therefore, the two setting information pieces are received from the camera 110.

If the automatic setting mode is selected, a pixel determined as being in white is extracted from the measurement region designated by the client 120 (for example, a pixel having a pixel value closest to the value corresponding to white, excluding noise, may be extracted). A color conversion coefficient for bringing the value of the extracted pixel determined as being in white closer to the value corresponding to white is calculated. A color conversion process based on the calculated coefficient is applied to all pixels of the process subject to perform the white balance adjustment. On the other hand, if no measurement region is designated from the client 120, a pixel determined as being in white is extracted from regions divided based on the map. A color conversion coefficient is calculated for each of the regions, and color conversions are performed thereon to implement a white balance adjustment.

In the manual setting mode, a white balance adjustment based on the color temperature and light source information designated by the client 120 is performed on each of regions divided based on the map. Different process parameters are applied between pixels with a brightness value higher than a threshold value and pixels with a brightness value equal to or lower than the threshold value to set a white balance.

The process settings can also be changed with reference to the brightness threshold value set in the attribute generating unit 409 for image processes other than the white balance adjustment, such as a noise reduction process, a sharpness process, a contrast adjustment, and a saturation adjustment.

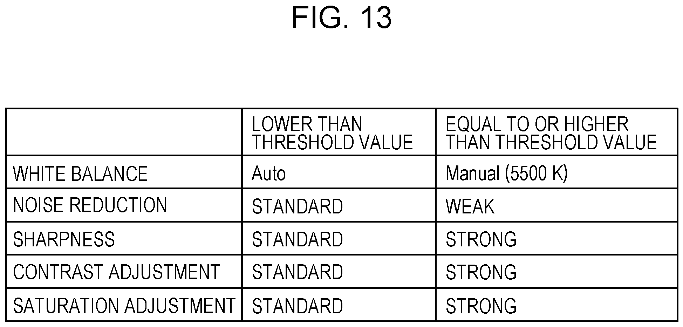

Fig. 13 illustrates changing of parameters for the components of the image processing unit 207 based on a threshold value set by the attribute generating unit 409. For each of the components of the image processing unit 207, process details can be defined based on results of the comparisons with the brightness threshold value set by the attribute generating unit 409. For a white balance adjustment, Auto is set for a darker region with a brightness value lower than the threshold value, and Manual (5500K) is set for a brighter region with a brightness value equal to or higher than the threshold value. Parameters are also set in the manner as illustrated in Fig. 13 for noise reduction and sharpness.

For example, for noise reduction, a parameter for performing a weaker noise reduction on a bright region having a brightness value equal to or higher than a threshold value is set compared with a region with a brightness value lower than the threshold value. For sharpness, contrast and saturation adjustments, a parameter for performing a stronger noise reduction on a bright region having a brightness value equal to or higher than the threshold value is set compared with a region with a brightness value lower than the threshold value. Changing the parameter in accordance with a region composed as a bright region in the manner as described above can achieve higher color reproducibility.

Next, processes to be performed in the client 120 will be described. In the client 120, a moving image distributed from the camera 110 can be displayed, and settings relating to imaging to be performed by the camera 110 and settings relating to a network can be defined.

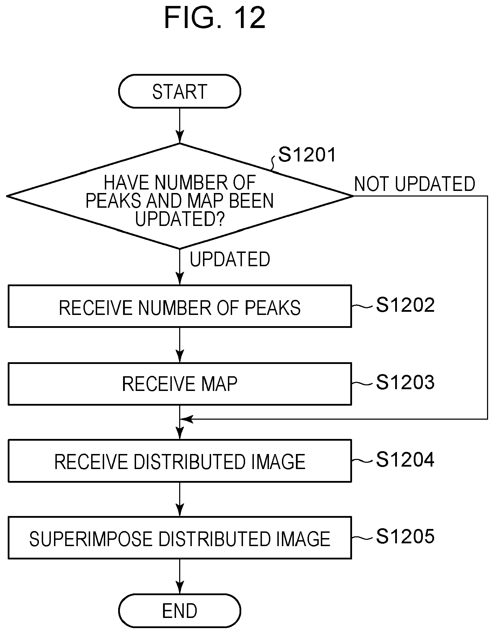

Next, settings for a white balance to be defined by a user will be described with reference to Fig. 12. First, in step S1201, the client 120 after a shift to a mode for white balance setting determines whether the number of peaks detected in step S504 by the image processing unit 207 and the map generated in step S505 have been updated for the camera 110. If they have been updated, the number of peaks detected in step S504 in the image processing unit 207 and the map generated in step S505 are distributed by the communication unit 209 in the camera 110 and are received by the communication unit 306 in the client 120 in steps S1202 and S1203.

Next, in step S1204, the communication unit 306 receives the distributed image from the camera 110. In step S1205, the display unit 307 displays the received map over the captured image distributed from the camera 110 on a display screen on a monitor or a display device used by a user. In this case, regions having different input/output characteristics on the map may be placed within a frame or may be displayed in different colors, or one of the regions may blink. Alternatively, character strings or symbols corresponding to the input/output characteristics can be displayed when the regions are clicked to select.

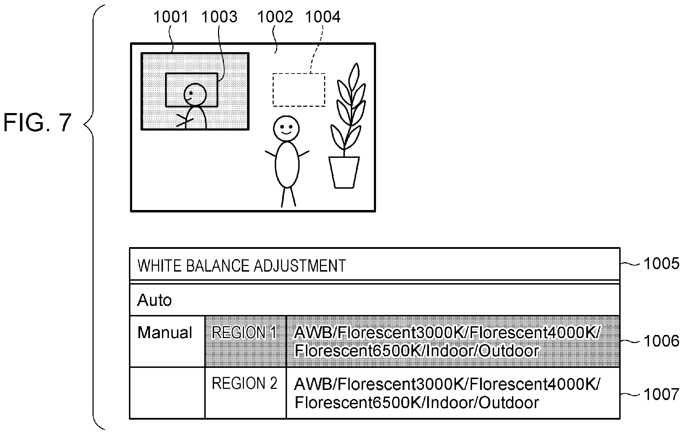

Fig. 7 illustrates an example of a display screen for selecting a white balance adjustment region and a white balance adjustment method (operation mode) by a user. Fig. 7 is a schematic diagram illustrating an example in which a room with a window is imaged and has a bright window on its left and a human figure walking outside. The example in Fig. 7 further has another human figure and a plant inside of the room. A user can select a region for selecting a white reference for a white balance adjustment for each of regions divided based on the displayed map. Referring to Fig. 7, regions applying mutually different gamma curves are displayed as a map such that a bright region 1001 outside the window and a region 1002 darker than the outside of the window, which is acquired by imaging the inside of the room, can be distinguished. Thus, a white balance adjustment method corresponding to each of the regions can be selected.

In this case, a plurality of white balance adjustment modes is available for a designated region, and a mode for processing automatically (Auto) or a mode for manually selecting a light source or a color temperature of a type of environment can be selected. In the example illustrated in Fig. 7, a user can select a selection field 1006 and a selection field 1007 one by one from displayed white balance adjustment modes for a region 1 corresponding to the region 1001 and a region 2 corresponding to the region 1002. The white balance adjustment modes may include "AWB (auto white balance)", "Fluorescent 3000K, 4000K, 6500K (fluorescent lamp and color temperature Kelvin)", "Indoor (inside of room)", and "Outdoor (outside of room)". The modes may be displayed in a pull-down format for selection. "Auto" is set by default for each of regions, and the selection field 1006 can be selected to set "Manual".

In the mode for automatic processing, an arbitrary position (such as a region 1003 and a region 1004 in Fig. 7) on an image can be designated by performing a drag and drop operation as a region for measuring a white balance for each of regions divided based on the map. Thus, a user can designate a region (reference region) as a white reference in advance for improved accuracy of correction of the white balance. Referring to Fig. 7, a rectangular 1004 may be designated for a white wall to achieve intended accuracy of correction of the white balance.

In a case where a user designates a white balance measurement region, region information indicating the measurement region is transmitted to the camera 110 as a set value for the WB adjusting unit 405 in the image processing unit 207. The shape of the region to be designated by a user and to be transmitted to the camera 110 may be any arbitrary shape excluding a rectangular shape. In a case where a user does not particularly designate a white balance region, "Auto" is notified to the camera 110 so that a white balance adjustment is automatically performed in the camera 110 for each of regions divided based on the map.

According to the present disclosure, a white balance correction is applied for each gamma curve so that colors can be accurately reproduced for regions with illuminance differences or environmental differences.

According to this embodiment, a process to be performed is changed in accordance with a brightness region having a high or low brightness, instead of a positional region. Therefore, for example, in a scene with different angles of view due to different ways of panning or tilting of a camera or in a scene where a bright object moves on a screen for traffic monitoring at night, colors can be accurately reproduced for regions with illuminance differences or environmental differences.

### Embodiment 2

Next, Embodiment 2 of the present disclosure will be described. According to Embodiment 1, histogram analysis is performed on a bright part of one image, and an image is generated by using different gamma adjustment values (gamma curves) for partial regions divided based on their brightnesses so that the bright part and a darker part can have different white balances. According to Embodiment 2, a plurality of images with different exposures is composed to generate a composed image.

Like numbers refer to like components and processes in Embodiment 1 and Embodiment 2, and any repetitive descriptions on those having similar configurations or functions will be omitted.

According to this embodiment, two frames (captured images) are acquired under imaging conditions with different exposures from each other, and a histogram analysis, a development process, and a gamma adjustment processing are performed on one of the frames corresponding to a brighter object by the method according to Embodiment 1. Then, both of the frames are composed to be output as a composed image. The number of images to be captured with different exposures and to be composed is not limited to two, but three or more captured images can be composed. For simple description, the frames corresponding to an entire imaged area are to be composed according to this embodiment. However, embodiments of the present disclosure are not limited thereto, but at least a part of captured images may be composed.

First, a flow of operations to be performed in the image processing unit 207 will be described with reference to Fig. 8. In steps S501 and S502, the image processing unit 207 in step S1101 according to this embodiment receives images for frames to be composed and determines whether a development process has been performed thereon, like Embodiment 1. According to this embodiment, two images captured under different exposure conditions from each other are acquired. For acquiring the different exposure conditions, different shutter speeds and/or different gains of the image pickup element may be applied. If a requested number of images to be composed are received, the processing moves to step S503. If not, the processing returns to step S501.

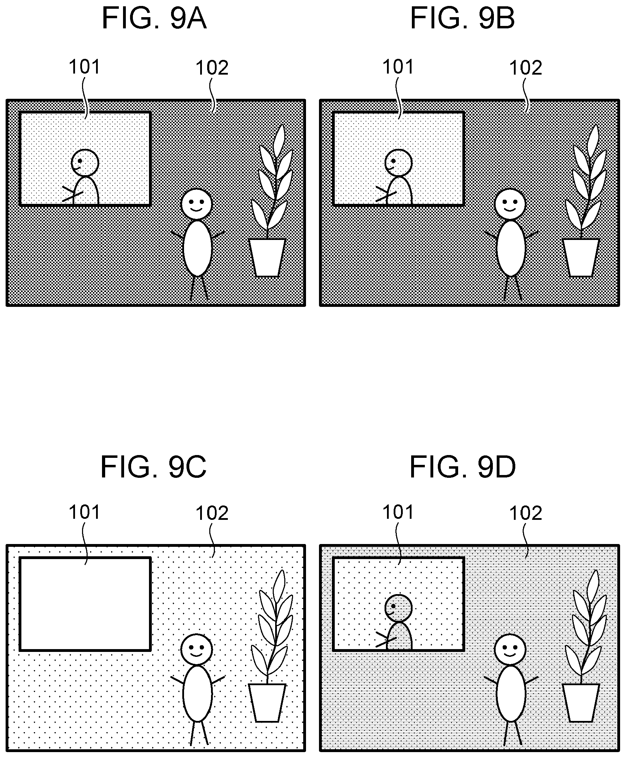

Next in step S504, whether an instruction to generate a map has been transmitted from the client 120 is determined, like step S503 according to Embodiment 1. Next, map generation according to Embodiment 2 will be described. If map generation is instructed, a histogram analysis is performed in step S504 like Embodiment 1, and the number of peaks is determined in step S505. It is assumed here that the histogram analysis processing unit 411 performs a histogram analysis on a high EV frame, which will be described below. Because the same histogram analysis method is applied as that of Embodiment 1, any repetitive descriptions will be omitted. Next, high EV and low EV frames will be described in further detail. Fig. 9A illustrates a frame (hereinafter, high EV frame) captured with an exposure for a bright target, and Fig. 9C illustrates a frame (hereinafter, a low EV frame) captured with an exposure for a dark target. The low EV frame in Fig. 9C has whiteout in a region corresponding to the outside of a bright window while an exposure close to an adequate value can be obtained in a region corresponding to a dark interior. Here, EV stands for exposure value.

If the number of peaks is equal to two in step S505, a map is generated in step S506. Because this embodiment assumes composing two frames with different exposures, the map is based on the composition ratio of the plurality of images. More specifically, the resulting map has four categories of, from a lower brightness side, an area with a low EV frame ratio of 100%, a mixture area of a low EV frame and a high EV frame, an area with a high EV frame ratio of 100%, and an area with a high EV frame ratio of 100% and with a plurality of detected peaks having different gamma characteristics. The map generation may be performed on a high EV frame or a low EV frame. Fig. 10B illustrates an example of the map generated according to this embodiment based on the image capturing scene in Figs. 9A to 9D.

Referring to Fig. 10B, a shaded dark area 1401 in Fig. 10B has a low EV frame ratio of 100%. A widest area 1402 is a mixture area of a low EV frame and a high EV frame. Because a human figure inside of the room is shown brighter, an area 1403 corresponds to an area with a high EV frame ratio of 100%. An area 1404 showing outside of the window is shown the brightest and has a high EV frame ratio of 100% and has a plurality of peaks detected with different gamma characteristics. The thus generated map is transmitted to the client 120.

After that, the processing in step S507 is performed in the same manner as that in Embodiment 1. Fig. 9B illustrates an image acquired by performing a histogram analysis and then development and gamma adjustment processes on the image captured with an exposure for a bright target illustrated in Fig. 9A. The gamma adjustment reduces the brightness of the bright region outside of the window to an appropriate brightness.

Next, the WDR composition processing unit 414 performs a process for composing images after a gamma adjustment performed on the high EV frame in step S1103 and the low EV frame. The composing process by the WDR composition processing unit 414 will be described with reference to Fig. 10A. Fig. 10A has a horizontal axis indicating a reference brightness and a vertical axis indicating a composition ratio for composing images. A solid line 1301 indicates a composition ratio of a low EV frame against the reference brightness, and a chain line 1302 indicates a composition ratio of a high EV frame composition ratio against the reference brightness. The low EV frame may only be used for a region darker than a threshold value Y1 of the reference brightness for the composing, and the high EV frame may only be used for a region brighter than a threshold value Y2 of the reference brightness. The composition ratio can be changed gradually to smooth the transition between images in a middle region between boundaries Y1 to Y2 near the threshold values of the reference brightness. A high EV frame is used as the reference brightness according to this embodiment.

Fig. 9D illustrates an image after the composing process. Composing the images in Fig. 9A and Fig. 9C results in an image with a wider dynamic range which can represent from a bright area to a dark area. The processing in the client 120 is performed in the same manner as that in Embodiment 1 except that the number of regions indicated in the map information is equal to four.

According to this embodiment, a white balance correction can be applied for each of gamma curves in WDR imaging so that colors can be accurately reproduced for regions with illuminance differences or environmental differences.

According to this embodiment, a process to be performed is changed in accordance with a brightness region having a high or low brightness, instead of a positional region. Therefore, for example, in a scene with different angles of view due to different ways of panning or tilting of a camera or in a scene where a bright object moves on a screen for traffic monitoring at night, colors can be more accurately reproduced for regions with illuminance differences or environmental differences.

### Embodiment 3

Next, Embodiment 3 of the present disclosure will be described. According to Embodiment 1 and Embodiment 2, different gamma adjustment values are set for ranges divided based on their brightness for performing a white balance adjustment. According to Embodiment 3 on the other hand, different gamma adjustment values and priority modes are applied to ranges divided based on their brightnesses. Like numbers refer to like components and processes in Embodiments 1 to 3, and any repetitive descriptions on those having similar configurations or functions will be omitted.

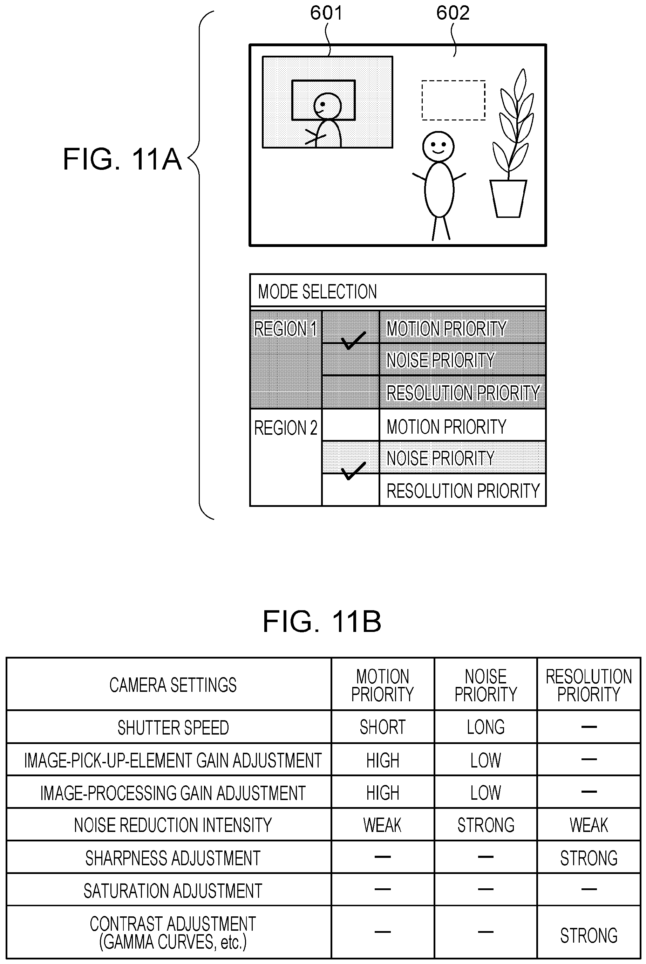

Operations to be performed in the client will be described. Fig. 11A illustrates an example of a display screen (GUI) for setting by a user. A user can select a mode of high priority based on the map information superimposed on the display screen in the client 120, such as "MOTION PRIORITY", "NOISE PRIORITY" or "RESOLUTION PRIORITY". According to this embodiment, the map has four regions at a maximum. However, for example, in a case where a shutter speed is changed, two images are to be composed according to this embodiment. Therefore, because dividing a low EV frame and a high EV frame into regions with different gamma characteristics may not be performed, the number of regions to be displayed to a user can be reduced in accordance with the selected mode.

Fig. 11B illustrates an example of changes of camera settings in a case where the priority mode selected by a user is applied. A case where "MOTION PRIORITY" is selected for a region 601 as illustrated in Fig. 11A will be described as an example.

Referring to Fig. 11B, the shutter speed for the frame corresponding to the region 601 has a shorter value compared with a case where the other item is selected. This results in a less motion-blurred image. According to Embodiment 1, this method is applicable because the noise reduction intensity can be reduced to reduce motion blur.

In a case where "RESOLUTION PRIORITY" is set in the region 602, sharpness adjustment such as an edge emphasis or a gamma curve adjustment as illustrated in Fig. 11B can be performed to acquire an image having a high contrast and a high sense of resolution. It should be noted that a correction may be performed to reduce the noise reduction intensity for a higher contrast.

According to the present disclosure, a priority mode is selected for each different gamma curve so that detail settings such as less motion blur, lower noise and high sharpness can be set for each of regions with illuminance differences or environmental differences to acquire an image desired by a user.

According to this embodiment, regions (such as a first region and a second region) applying different gamma curves from each other are mainly described. However, the present disclosure is also applicable to regions applying different exposure settings from each other. More specifically, in a case where different exposure corrections are applied to regions of the composed image, the correction processing according to the aforementioned embodiments may be defined for each of the regions for application.

### Embodiment 4

Next, Embodiment 4 of the present disclosure will be described. While different gamma adjustment values are set for each of ranges divided based on their brightnesses to execute a white balance adjustment according to Embodiment 1 and Embodiment 2, a focus adjustment is performed according to Embodiment 4. Like numbers refer to like components and processes in Embodiments 1 and 2 and Embodiment 4, and any repetitive descriptions on those having similar configurations or functions will be omitted.

Although this embodiment will be described in which a plurality of images with different exposures according to Embodiment 2 are composed to generate a composed image, this embodiment is also adapted to one image based on Embodiment 1.

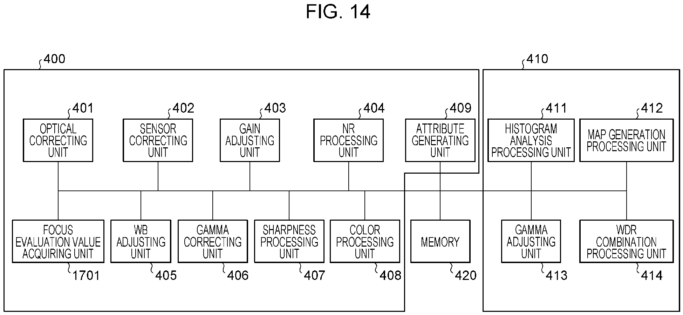

Fig. 14 illustrates details of a configuration of an image processing unit 207 according to this embodiment. According to this embodiment, the development processing unit 400 in the image processing unit 207 has a focus evaluation value acquiring unit 1701. The focus evaluation value acquiring unit 1701 is configured to acquire an evaluation value for a focus on a designated area for each of a plurality of images with different exposures.

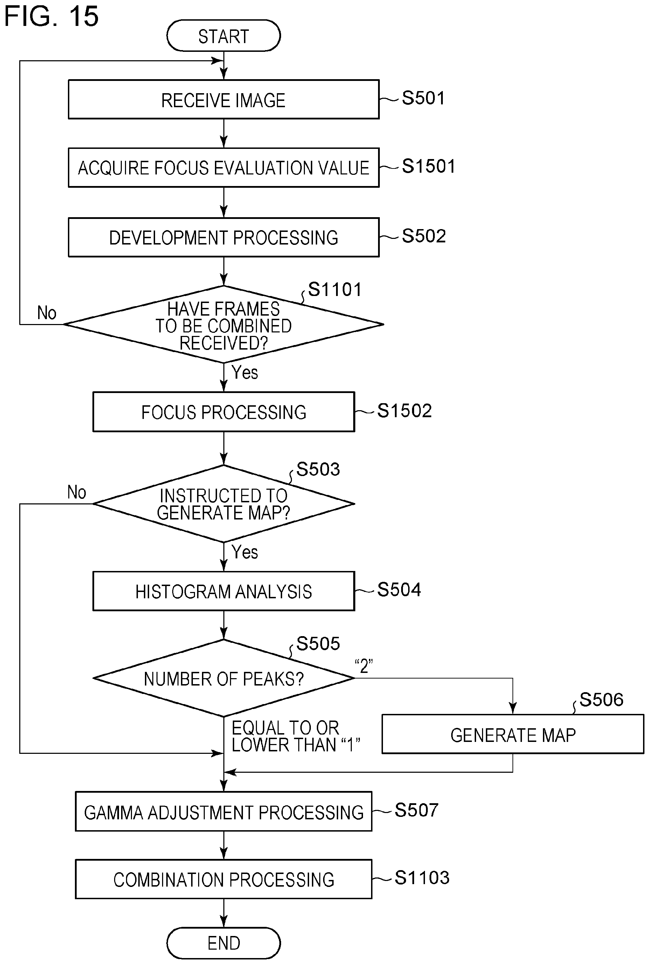

Next, with reference to Fig. 15, a flow of operations to be performed by the imaging system control unit 206 and the image processing unit 207 will be described. According to this embodiment, after receiving an image in step S501, the focus evaluation value acquiring unit 1701 acquires a focus evaluation value (step S1501). Because the subsequent processing in steps S502 and S1101 is the same as that of Embodiment 2, any repetitive descriptions will be omitted.

Next, in step S1502, a focus process is performed by using the focus evaluation value acquired in step S1501. The focus evaluation value is for an area designated by a user and is held for corresponding one of images with different exposures. In this step, a focus operation is driven based on a focus evaluation value for an image with an exposure designated by a user.

The user designated area and the focus evaluation value will be described in detail below. A user may select a region to be used for a focus judgment from the areas 1401 to 1404 of the map illustrated in Fig. 10B, in the same manner as in Embodiments 1 and 2.

If a user selects the area 1401, a focus evaluation value is calculated based on a low EV frame because the area 1401 has a low EV frame ratio of 100%. If a user selects the area 1403 or the area 1404, a focus evaluation value is calculated based on a high EV frame because the areas 1403 and 1404 have a high EV frame ratio of 100%.

The area 1402 is a mixture area of a low EV frame and a high EV frame. If a user selects the area 1402, either high EV or low EV frame may be used. According to this embodiment, a higher one of focus evaluation values of frames is adopted.

Because the processing in subsequent steps S503 to S1103 is the same as that in Embodiment 2, any repetitive descriptions will be omitted.

With the configuration as described above, a user can designate an area to be focused. This means that a user can select an area to be focused and an exposure for improved visibility of a desired area. Even in a case where an object is moving, a stable evaluation value can be acquired, instead of a value varying in accordance with the motion of the object, because an exposure is designated to acquire the focus evaluation value.

Whether the gamma adjustment processing in step S507, which is performed Embodiments 1 and 2, can be executed or not may be set independently from this embodiment.

### Other Embodiments

Although a white balance adjustment is performed according to Embodiments 1 and 2, an image parameter adjustment is performed according to Embodiment 3, and a focus adjustment is performed according to Embodiment 4, the plurality of adjustments may be performed selectively on a designated area according to another embodiment.

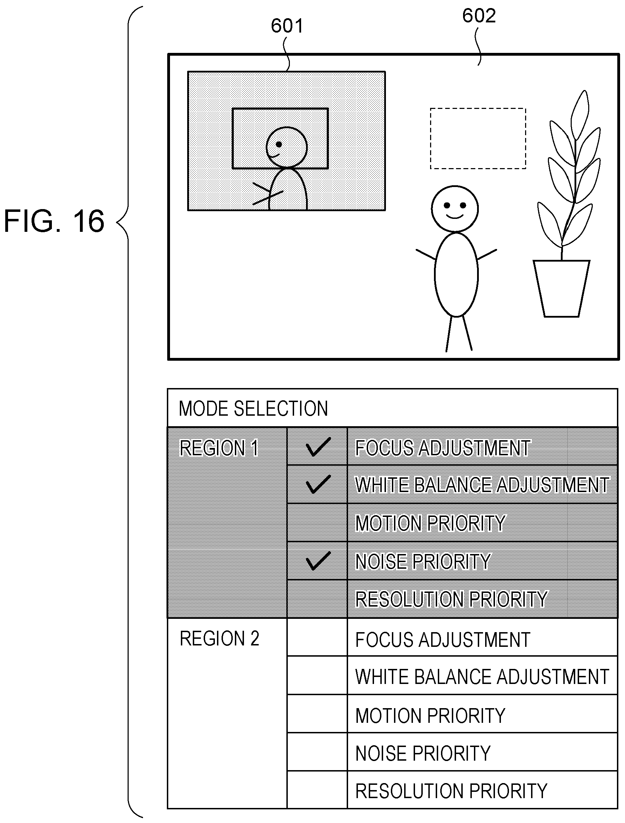

Fig. 16 illustrates an example of a display screen (GUI) usable by a user for setting. A user can select a plurality of modes to be adjusted such as "NOISE PRIORITY", "FOCUS", "WHITE BALANCE" based on map information superimposed on the display screen presented by the client 120. However, setting a focus is enabled only with one map information piece.

Thus, the adjustment processes can be set selectively and simultaneously for an exposure area of interest of a user so that a desired image can be easily acquired.

The aforementioned embodiments can facilitate easy identification by a user of regions applying different gamma curves so that a correction processing such as a white balance adjustment can be performed easily for each of the regions and that higher color reproducibility can be achieved.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{TM}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An imaging apparatus (110) comprising:
imaging means (201, 202) configured to acquire a captured image;
setting means (410) configured to set a first region (602) of the captured image and apply a first input/output characteristic (802) to the first region and to set a second region (601) of the captured image and apply a second input/output characteristic (803) to the second region; and
output means configured to output region information indicating at least one of the first region (602) and the second region (601).

2. The imaging apparatus (110) according to Claim 1, further comprising correction processing means (400) configured to have a plurality of white balance set values and to adjust a white balance by switching between or among the plurality of white balance set values based on a brightness value of the first region (602) or the second region (601).

3. A client apparatus (120) comprising:
acquiring means configured to receive a captured image including region information indicating a first region (602) of the captured image and a second region (601) of the captured image, wherein a first input/output characteristic (802) has been applied to the first region (601) and a second input/output characteristic (803) has been applied to the second region (601) in the captured image; and
display control means configured to control a display unit (307) to display the first region and the second region in a distinguishable manner.

4. The client apparatus (120) according to Claim 3, further comprising receiving means configured to receive a setting for adjusting a white balance of each of the first region and the second region.

5. The client apparatus (120) according to Claim 3 or 4, further comprising receiving means configured to receive a reference region setting for adjusting a white balance of each of the first region and the second region.

6. The client apparatus (120) according to Claim 3, 4 or 5, further comprising receiving means configured to receive a priority level setting for imaging for each of the first region and the second region.

7. The client apparatus (120) according to any one of Claims 3 to 6, further comprising receiving means configured to receive an image process parameter setting for each of the first region and the second region.

8. The client apparatus (120) according to any one of Claims 3 to 7, wherein the first region and the second region are regions with mutually different exposure settings.

9. A control method for an image processing system having an imaging apparatus (110) and an image processing apparatus (207), the method comprising:
by the imaging apparatus (110),
acquiring a captured image;
setting a first region (602) and a second region (601) of the captured image and applying a first input/output characteristic (802) to the first region and a second input/output characteristic (803) to the second region (601); and
outputting region information indicating at least one of the first region and the second region, and
by the image processing apparatus (207),
acquiring the captured image and the region information from the imaging apparatus (110); and
controlling a display unit (307) to display the first region and the second region in a distinguishable manner.

10. A control method for an imaging apparatus (110), the method comprising:
acquiring a captured image;
setting a first region (602) and a second region (601) of the captured image and applying a first input/output characteristic (802) to the first region and applying a second input/output characteristic (803) to the second region; and
outputting region information indicating at least one of the first region (602) and the second region (601).

11. A control method for a client apparatus (120) communicably connected to an imaging apparatus (110), the method comprising:
acquiring a captured image including region information indicating a first region (602) of the captured image and a second region (601) of the captured image from the imaging apparatus (110), wherein a first input/output characteristic (802) has been applied to the first region (601) and a second input/output characteristic (803) has been applied to the second region (601); and
controlling to display the first region and the second region in a distinguishable manner.

12. A storage medium storing a program causing a computer to carry out the method of any one of claims 9 to 11.
